(19) Europäisches Patentamt
European Patent Office
Office européen des brevets

(11) Publication number: 0 338 434 A2

(12) **EUROPEAN PATENT APPLICATION**

(21) Application number: 89106623.5

(51) Int. Cl.4: B32B 27/36 , B32B 27/18

(22) Date of filing: 13.04.89

(30) Priority: 18.04.88 JP 94850/88

(43) Date of publication of application:
25.10.89 Bulletin 89/43

(84) Designated Contracting States:
DE GB

(71) Applicant: DIAFOIL COMPANY, LIMITED
3-2, Marunouchi 2-chome
Chiyoda-ku Tokyo(JP)

(72) Inventor: Utsumi, Shigeo B-311
,Mitsubishi-Kasei
Sakuradai-Apaato 3 Sakuradai Midori-ku
Yokohama-shi Kanagawa-ken(JP)

(74) Representative: Patentanwälte TER MEER - MÜLLER - STEINMEISTER
Mauerkircherstrasse 45
D-8000 München 80(DE)

(54) **Oriented composite polyester film.**

(57) Disclosed herein is an oriented composite polyester film comprising at least three layers, wherein at least one inner layer comprises a polyester containing a bleedable substance, and the two outermost layers comprises a polyester containing no bleedable substance.

Although a composite film of the present invention contains a bleedable substance, the amount of substance bleed out of the film is very small, and the properties provided by the bleedable substance are hardly deteriorated during the production or the use of the film. Thus, the composite film of the present invention is suitable for use in various industries.

EP 0 338 434 A2

# ORIENTED COMPOSITE POLYESTER FILM

## BACKGROUND OF THE INVENTION

The present invention relates to an oriented composite polyester film and, more particularly, to an oriented composite polyester film which contains a bleedable substance in the inner layer and which is suitable for various industrial applications.

Polyester films, which are excellent in heat resistance, mechanical strength, rigidity, electric characteristics and transparency, have conventionally been used in various industrial applications and have found a wide variety of use. With the increase in the range of its use, polyester films are required to have characteristics improved more. However, no polyester film has satisfied these severe requirements.

For example, when polyester films for window films, automobile window films, blue-tinted films for X-ray, video tapes and Ba-ferrite DAT are colored with dyes, even if a dye which is satisfactory in color tone, heat resistance and dispersibility is selected, the dye sublimates and contaminates the casting roll, stretching roll and tenter, thereby making it impossible to produce a film of a different color. Thus, the above-described colored films cannot be practically produced in the present state of art, or even if they are produced, the manufacturing cost comes very high.

Many polyester films are used in an electric appliance as an electric insulator for a capacitor, motor, etc.. and as a magnetic tape. Therefore, the development of flame-resistant polyester films has been promoted in the USA. As a method of providing flame-resistance to polyester films, a method of blending various flame-retardants and a method of copolymerizing various flame-retardants with a polyester are known. In order to further enhance the flame-resistance of a polyester, even if a flame-retardant having a good heat resistance, dispersibility and flame-resistance is used, it is necessary to add a large amount of the flame-retardant to the polyester. However, if a large amount of flame-retardant is added to the polyester, the flame-retardant disadvantageously bleeds out to the surface of the polyester film with the elapse of time, which leads to the separation between the polyester film and the deposited layer or the magnetic layer, or hinders the rotation of the motor. The same problems are present in a polyester film containing an ultraviolet light absorber.

As a result of the study undertaken by the present inventor so as to solve the above-described problems, it has been found that if a polyester film containing a bleedable substance has a specific structure, it is possible to prevent the bleedable substance from bleeding without impairing the effect thereof. On the basis of this finding, the present invention has been achieved.

## SUMMARY OF THE INVENTION

In an aspect of the present invention, there is provided an oriented composite polyester film comprising at least three layers, wherein at least one inner layer comprises a polyester containing a bleedable substance, and the two outermost layers comprise a polyester containing no bleedable substance.

## DESCRIPTION OF THE PREFERRED EMBODIMENTS

A composite polyester film in the present invention refers to a polyester film produced by melt coextruding polyesters for all layers from die into a composite film, stretching the composite film and heat setting it, if necessary. A three-layered composite polyester film will be explained hereinunder as a composite polyester film, but the composite polyester film of the present invention is not restricted to a three-layered film and includes also a multi-layered film having four or more layers so long as it fulfils the object of the present invention.

A polymer for each layer of the composite film of the present invention is a polyester selected from thermoplastic polyesters. Among the thermoplastic polyesters, it is polyethylene terephthalate and a copolymer thereof that are the most excellent in polymerization reactivity, film-forming property and film quality and are also favorable from the viewpoint of economy. As other polyesters, homopolyesters such as polybutylene terephthalate, polyethylene-2,6-naphthalate, polybutylene dibenzoate, and a polyester obtained from bisphenol A and terephthalic acid or isophthalic acid are usable. Furthermore, are usable copolymers of the above-described homopolymers including polyethylene terephthalate, which are obtained by using,

as comonomer, at least one copolymerizing component such as a diol component, e.g., ethylene glycol, propylene glycol, 1,4-butane diol, neopentyl glycol, 1,4-cyclohexane dimethanol, xylene glycol, bisphenol A, diethylene glycol, polyethylene glycol, polytetramethylene glycol and polypropylene glycol; a dicarboxylic acid, e.g., adipic acid, sebacic acid, phthalic acid, terephthalic acid, isophthalic acid and 2,6-naphthalene dicarboxylic acid; a hydroxy dicarboxylic acid, e.g., p-(hydroxyethoxy)benzoic acid; a polyol such as glycol.

The content of the comonomer component is so determined that the total molar content thereof in the dicarboxylic acid component and the diol component does not exceed 60 mol%.

Polypropylene terephthalate, polypentylene bibenzoate, a polyester obtained from 3,3-bis-(p-oxyphenyl)pentane and terephthalic acid, a polyester obtained from 2,2-bis-(3-methyloxyphenyl)propane and terephthalic acid, a polyester obtained from 2,2-bis-(p-oxyphenyl)pentane and isophthalic acid or terephthalic acid are also usable in the present invention.

In the present invention, the outermost layers refer to the layers constituting both surfaces of a composite film and the other layers are called inner layers.

The intrinsic viscosity of the polyester constituting the outermost layers of the film of the present invention is preferably equal to or larger than that of a polyester constituting an inner layer. In addition, it is preferable that the glass transition temperature of the polyester constituting the outermost layers of the film of the present invention is preferably equal to or larger than that of a polyester constituting an inner layer. The lower the intrinsic viscosity and/or the glass transition temperature of a film is, the more rapidly a bleedable substance bleed out of a film. It is therefore unfavorably necessary in order to suppress the bleeding of the substance to increase the thickness of the outermost layers when the intrinsic viscosity and/or the glass transition temperature of the outermost layers is lower than that of an inner layer. The intrinsic viscosity and the glass transition temperature are different depending upon the kind and the amount of the bleedable substance contained in an inner layer, but in any case, it is preferable that the intrinsic viscosity and the glass transition temperature of the outermost layers are equal to or higher than those of an inner layer. The more the content of the bleedable substance in an inner layer is, the higher are the intrinsic viscosity and the glass transition temperature which the outermost layers are required to have. The difference in the intrinsic viscosity between the outermost layers and the inner layer is preferably not less than 0.02, more preferably not less than 0.05, and the difference in the glass transition temperature between them is preferably not less than 5 °C, more preferably not less than 10 °C.

The bleedable substance used in the present invention is a substance which is added to a polyester in order to provide a certain property and sublimates or bleeds out under a constant condition.

To state this more precisely, a substance which remains in a usual single-layer film in the ratio of 95 wt% or less based on the original amount of substance added after the film produced and wound has been dried at 150 to 250 °C for 24 hours in vacuo or the substance has been extracted with chloroform by the Soxhlet method is called a bleedable substance. In the composite film of the present invention, the bleeding amount of the bleedable substance during the production and the use of the film is as low as 5 wt%, preferably 3 wt% based on the amount added.

As examples of the bleedable substance, various dyes, ultraviolet absorbers and flame-retardants will be cited. As the dye, in consideration of the heat resistance during the production of a polyester and the dispersibility in the polyester, anthraquinone dyes and phthalocyanine dyes are preferable from the viewpoint of chemical structure and disperse dyes and oil-soluble dyes are preferable from the viewpoint of dyeing properties. As the ultraviolet absorbers, there are various kinds such as salicylic acid type ultraviolet absorbers, benzophenone type ultraviolet absorbers, benzotriazole type ultraviolet absorbers and cyanoacrylate type ultraviolet absorbers. Among these, benzotriazole type ultraviolet absorbers are preferably used in terms of heat resistance and dispersiblity. Known flame-retardants may also be used. For example, inorganic flame-retardants, in particular, antimony pentoxide, bromine and chlorine flame-retardants, and phosphorus flame-retardants are usable either singly or in the form of a mixture thereof. Among these, flame-retardants having a high heat resistance and a good dispersibility in a polyester are preferably selected.

Several kinds of these bleedable substances may be appropriately selected and added to a polyester either singly or in a form of a mixture thereof during the production of a polyester or the production of a film. The content of the bleedable substance in a polyester is preferably in the range of 0.01 to 10 wt%.

The thicker the outermost layers, the more effective for preventing the bleedable substance contained in an inner layer from bleeding out. However, since the properties of the film as a whole are determined by an inner layer, too thick outermost layers are disadvantegeous from the point of view of film properties. Accordingly, the thickness of the inner layer is at least 50%, preferably not less than 65%, more preferably not less than 80% of the total thickness of the composite film.

The thickness of each of the outermost layers is not less than 0.1 $\mu$m, preferably not less than 0.5 $\mu$m,

more preferably not less than 1 μ. It is not always necessary that the thicknesses of the two outermost layers are the same.

The composite polyester film of the present invention is produced, for example, in the following manner.

Each of polyesters for the two outermost layers and a polyester containing the bleedable substance for at least one inner layer are respectively melted at a temperature from 270 to 320 °C, then these melted polyesters are co-extruded into a non-stretched composite polyester film of at least three layers. The composite film is then stretched.

The film stretching conditions are not particularly restricted and the non-stretched film is stretched by an ordinary method. In the case of using polyethylene terephthalate for both the inner layer and the outermost layers, the stretching ratio is 2.0 to 5.0 times in one of the machine direction and the transverse direction in the case of uniaxial stretching. In the case of biaxial stretching, 2 to 5 times in both machine and transverse directions. The stretching temperature is generally 70 to 160 °C and if heat treatment is necessary, it is carried out at a temperature of 150 to 255 °C.

The conditions for producing a polyester is preferably conformed to those for producing a polyester for the inner layer.

In the case of biaxial stretching, various stretching methods are usable such as sequential biaxial stretching, simultaneous biaxial stretching and restretching thereafter.

A composite film of the present invention is an excellent film in which the properties, for example, ultraviolet light absorbing ability, flame resistance, coloring power and adhesion, provided by the addition of the bleedable substance are not changed even if the film is processed or used at 100 to 250 °C for 5 minutes. Therefore, the composite polyester film of the present invention fully shows the effect thereof, for example, in the uses which require coloring and flame resistance, in food packaging which must intercept ultraviolet rays, and the uses which require printability and adhesion as well as these properties. Especially, in the case of using a composite film of the present invention for shrinkable labels, the shrinkage of the film in one direction of the machine and transverse directions in a hot water of 80 °C is preferably 20 to 80%, and the shrinkage in the direction perpendicular thereto is preferably not more than 20%.

When the composite film of the present invention is used for various purposes, various coatings may be carried out, if necessary, in the off-line after the film is produced and wound in order to provide properties necessary for the uses, for example, adhesion, antistatic property, releasability and slipperiness. Alternatively, what is called in-line coating may be adopted in which the film is coated before it is introduced to a tenter for heat treatment or stretching in the transverse direction and dried in the tenter. Either a single surface or both surfaces may be subjected to such coating. In the case of off-line coating, an aqueous and or a solvent material is usable, while in the case of in-line coating, an aqueous or water-dispersed material is preferable. As the resin mainly used for in-line coating, polyester, acryl and urethane resins are usable either singly or in the form of a mixture thereof.

In any case, a combination of known techniques is possible so long as it fulfils the object of the present invention.

The present invention will be explained in more detail hereinunder with reference to the following non-limitative examples.

Example 1:

A polyethylene terephthalate blended with 0.5 wt% of Diaresin Yellow F, 0.5 wt% of Diaresin Red HS, 0.4 wt% of Diaresin Violet D, 0.24 wt% of Diaresin Blue N and 0.24 wt% of Diaresin Blue H3G (all of these dyes are produced by Mitsubishi Kasei Corporation) was used for the inner layer. The polyethylene terephthalate for inner layer had an intrinsic viscosity of 0.58. A polyethylene terephthalate having an intrinsic viscosity of 0.63 and containing no dye was used for the outermost layers on both sides of the inner layer. These polyethylene terephthalates were coextruded to form a composite film. The composite film was uniaxially stretched 3.7 times at 87 °C and thereafter stretched 3.8 times at 100 °C in the direction perpendicular thereto. The film was then heat treated at 210 °C to obtain a biaxially oriented polyethylene terephthalate composite film of smoke dark in color. The total thickness of the composite film was 2.5 μm and the thickness of each of the outermost layers was 1.5 μm.

The thus-obtained film was suitable as a film for automobile window. The casting drum, stretching roll and tenter were not contaminated during the production of the film. The sample film of the product was heat treated at 210 °C for 3 minutes under a stress,however,the visible light transmittance of the film was not changed.

Comparative Example 1:

A single-layer film only comprising the polyethylene terephthalate film used for the inner layer in Example 1 and having a thickness of 25 µm was produced under the same extruding, stretching and heat treating conditions. During the film formation, the dyes sublimed and contaminated the casting drum and the tenter. The sample film from the product was heat treated again at 210°C for 3 minutes under a stress in the same way as in Example 1. The dyes sublimed and the light transmittance of the film was raised.

Example 2:

A polyethylene terephthalate blended with 2.0 wt% of a phosphorus compound represented by the following formula and having an intrinsic viscosity of 0.57 was used for the inner layer. A polyethylene terephthalate having an intrinsic viscosity of 0.63 and not containing the phosphorus compound was used for the outermost layers on both sides of the inner layer. These polyethylene terephthalates were coextruded to form a composite film. The composite film was stretched 3.5 times at 85°C in the machine direction and 3.6 times at 98°C in the transverse direction. The film was then heat treated at 220°C to obtain a stretched composite film of 75 µm thick. The thickness of each of the outermost layers was 2.5 µm.

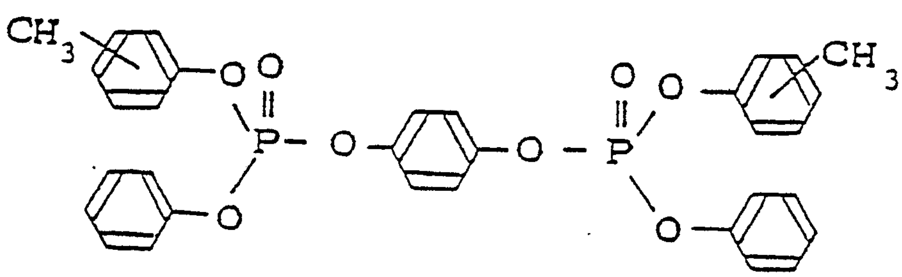

(phenylenebis(phenylcresyl phosphate))

When the polyethylene terephthalates were extruded from the dies during the film formation, there was no odor and also no odor in the tenter. Thus, there was no problem in the film formation.

The flame resistance of the film was VTM-2 and there was no problem in the flame resistance. When the film was subjected to 24-hour Soxhlet extraction using chloroform, the amount of extraction was 3.2 wt% (2.0 wt% of a phosphorus compound and 1.2 wt% of an oligomer) based on the film and almost no loss of the phosphorus compound was observed.

Comparative Example 2:

A single-layer film only comprising the polyethylene terephthalate film used for the inner layer in Example 2 and having a thickness of 75 µm was produced under the same extruding, stretching and heat treating conditions. During the film formation, a very strong odor was noticed when the polyethylene terephthalate was extruded from the die and also notices at the exit of the tenter, which were very troublesome in the film formation. When the film was subjected to the same extraction as in Example 2, the amount of extraction was 2.6 wt% (1.4 wt% of a phosphorus compound and 1.2 wt% of an oligomer) based on the film. The amount of phosphorus compound remaining in the film was small, and the film was also inferior in flame resistance.

Example 3:

A copolymerized polyethylene terephthalate which contains 5 wt% of 2-(2′-hydroxy-5′-methylphenyl)-benzotriazole, which is a benzotriazole type ultraviolet absorber, and in which 20 mol% of the acid component is isophthalic acid was used for the inner layer. The copolymerized polyethylene terephthalate had an intrinsic viscosity of 0.60. A polyethylene terephthalate having an intrinsic viscosity of 0.72 and not containing the ultraviolet absorber was used for the outermost layers on both sides of the inner layer. These polyethylene terephthalates were coextruded to form a composite film. The film was stretched 4.0 times at 79°C in the transverse direction solely and the film was then heat treated at 50°C to obtain a stretched composite film of 43 µm thick. The thickness of each of the outermost layers was 1.5 µm.

The shrinkage of the film in the transverse direction in hot water of 80°C for 30 seconds was 58% and the neck-in ratio in the direction perpendicular thereto (A sample of 10 cm x 10 cm was fixed in the transverse direction and shrunk in hot water of 80°C for 30 seconds. The maximum shrinkage was measured as the neck-in ratio) was 15%.

When this film was used as a label for a liquor bottle and left to stand at 180°C in vacuo for 24 hours, no change was observed in ultraviolet absorbing ability.

Comparative Example 3:

A single-layer film only comprising the copolymerized polyethylene terephthalate film used for the inner layer in Example 3 and having a thickness of 40 µm was produced under the same extruding, stretching and heat treating conditions. During the film formation, the ultraviolet absorber sublimed to the casting drum and the tenter to a great extent and a strong odor was noticed there.

When the thus-obtained film was used as a label for a liquor bottle and left to stand at 180°C in vacuo for 24 hours, more than half of the ultraviolet absorber sublimed and the ultraviolet absorbing ability was lowered to a great extent.

## Claims

1. An oriented composite polyester film comprising at least three layers, wherein at least one inner layer comprises a polyester containing a bleedable substance, and the two outermost layers comprises a polyester containing no said bleedable substance.

2. An oriented composite polyester film according to claim 1, wherein the intrinsic viscosity of said two outermost layers is equal to or more than the intrinsic viscosity of said inner layer.

3. An oriented composite polyester film according to claim 1 or 2, wherein said bleedable substance is a dye, a flame-retardant or an ultraviolet absorber.

4. An oriented composite polyester film according to any of claims 1 to 3, wherein the shrinkage of said film in one direction of the machine and transverse directions after treating in hot water of 80°C for 30 seconds is 20 to 80 wt% and the shrinkage in the direction perpendicular thereto is not more than 20 %.